Europäisches Patentamt

(19) European Patent Office

Office européen des brevets

(11) Numéro de publication: **0 133 385 B1**

## (12) FASCICULE DE BREVET EUROPEEN

(45) Date de publication du fascicule du brevet:
**10.12.86**

(21) Numéro de dépôt: **84401292.2**

(22) Date de dépôt: **21.06.84**

(51) Int. Cl.⁴: **B 23 K 11/36, H 01 R 39/39**

(54) Unité de soudage électrique par résistance du type ciseaux.

(30) Priorité: **11.07.83 FR 8311510**

(43) Date de publication de la demande:
**20.02.85 Bulletin 85/8**

(45) Mention de la délivrance du brevet:
**10.12.86 Bulletin 86/50**

(84) Etats contractants désignés:
**BE CH DE GB IT LI LU NL SE**

(56) Documents cités:
**DE - C - 484 468**
**FR - A - 2 505 697**
**US - A - 1 645 705**

(73) Titulaire: **Humblot, Bernard, 22 chemin du Parc,**
**F-78580 Bazemont (FR)**

(72) Inventeur: **Humblot, Bernard, 22 chemin du Parc,**
**F-78580 Bazemont (FR)**

(74) Mandataire: **Faber, Jean-Paul, CABINET FABER 34, rue**
**de Leningrad, F-75008 Paris (FR)**

ACTORUM AG

## Description

La présente invention concerne des unités de souda-électrique par résistance.

On connaît des unités de soudage par résistance comprenant un bâti supportant un circuit magnétique feuilleté d'un transformateur comprenant deux bobines d'enroulement primaire et un circuit secondaire relié aux électrodes de l'unité.

Généralement, chaque électrode est reliée au circuit secondaire par des tresses souples qui s'usent rapidement, compte-tenu des fortes réactions électrodynamiques auxquelles elles sont soumises.

Le demandeur, dans son Brevet français n° 2 044 476 du 22 mai 1969, a proposé une unité de soudage par résistance dans laquelle les électrodes de soudage sont reliées électriquement à un enroulement secondaire d'un transformateur dont l'enroulement primaire est destiné à être relié à une source de courant électrique alternatif, ledit enroulement secondaire étant constitué de deux tiges parallèles reliées électriquement entre elles à une extrémité, tandis que les autres extrémités sont reliées aux électrodes de manière à former avec des pièces à souder, le circuit secondaire du transformateur, lesdites tiges étant mobiles par rapport au primaire.

Avec une telle disposition, on réalise une unité de soudage présentant un grand nombre d'avantages:

Le circuit secondaire est directement en contact avec la pièce à souder,

Le circuit secondaire est rédui à sa plus simple expression puisqu'il ne comporte que les parties des tiges qui se trouvent à l'extérieur du circuit magnétique du transformateur, et bien entendu, la partie correspondante de la pièce à souder,

Le circuit secondaire extérieur présente une impédance constante dans le temps,

Le transformateur peut être réduit aussi bien dans ses dimensions que dans sa puissance,

On économise du courant électrique,

Le prix de revient de chaque soudure est diminué.

Dans la technique moderne on essaye d'automatiser le plus possible les appareillages et on tend à réduire le poids et les dimensions des unités de soudage. Or, du fait de sa conception, l'unité décrite dans le Brevet français n° 2 044 476 du 22 mai 1969 peut difficilement être réduite dans ses dimensions et en poids.

De plus, dans la réalisation décrite dans ledit Brevet français, le circuit secondaire était formé de deux tiges parallèles guidées séparément et reliées entre elles dans le transformateur par un shunt souple, ce qui nécessitait pour l'entretien un démontage du transformateur et la réalisation dans le transformateur de deux organes de guidage pour chaque tige.

Le démandeur, dans sa demande de Brevet français n° 2 505 697 du 12 mai 1982, a proposé une unité de soudage par résistance qui, en partant de la réalisation décrite dans son premier Brevet, est plus compacte, moins lourde et dont l'entretien est réduit au minimum.

Dans cette dernière réalisation qui vise la fabrication d'une unité de soudage pour la réalisation de points de soudure dits directs, le transformateur est constitué d'un enroulement primaire destiné à être relié à une source de courant alternatif et d'un enroulement secondaire formé d'une seule spire et mobile dans le transformateur, ledit enroulement secondaire étant formé d'un barreau de section rectangulaire en forme de U, dont l'une des branches est reliée par une tresse à une électrode, tandis que l'autre est reliée rigidement à l'autre électrode.

Une telle réalisation est très intéressante, car, on supprime tout guidage du circuit secondaire puisque celui-ci est relié rigidement à une électrode, elle-même portée par le vérin.

L'invention vise une nouvelle réalisation d'une unité de soudage d'un type connu sous l'appelation «ciseaux» dans laquelle les électrodes sont articulées sur un axe commun et reliées à un vérin, de manière à commander leur ouverture, ou leur fermeture, celles-ci étant reliées au secondaire d'un transformateur.

On conçoit que le mouvements des électrodes obligent à prévoir des tresses souples avec tous les inconvénients que cela entraîne.

Dans la technique antérieure, on connaît le Brevet américain n° 1 645 805 dans lequel il est décrit une unité de soudage comprenant un transformateur de forte puissance dont les sorties secondaires sont reliées par des barres à un axe supportant la pince ciseau.

L'une des barres est reliée électriquement à travers l'axe à l'une des électrodes, et isolée de l'autre, tandis que la seconde barre est reliée électriquement à travers ledit axe, à l'autre électrode et isolé de la première.

Une telle solution, à première vue, pourrait sembler séduisante, mais finalement, elle s'avère être moins avantageuse que les solutions classiques. En effet, les barres allongent dans des proportions considérables, le circuit secondaire, ce qui augmente l'impédance. De plus, comme les barres sont en contact avec l'axe autour duquel doit tourner la pince, il faut obligatoirement, réaliser une friction dure, faute de quoi, le contact n'est plus établi, de sorte que les modifications de positions angulaire de la pince sont difficiles à obtenir. Enfin, les barres tendent à s'écarter par réaction électrodynamique, et ces réactions vont dans le sens opposé à celui correspondant au bon contact des pièces. On conçoit par conséquent, que les fabrications actuelles aient divergé par rapport à de telles unités de soudage.

L'unité de soudage, selon l'invention, vise à réaliser un ensemble à pince ciseaux, utilisant un transformateur du type décrit dans le Brevet français n° 2 505 697 et dans lequel on peut supprimer les tresses souples et ainsi, bénéficier de tous les avantages ci-dessus énoncés.

L'unité de soudage électrique par résistance, selon l'invention, est du type ciseaux comprenant un transformateur dont l'enroulement primaire est destiné à être relié à une source de courant alternatif convenable, un circuit secondaire d'une seule spire, constitué par un barreau en forme de U, présentant deux branches, et monté mobile dans le transformateur, les extrémités libres desdites branches étant destinée à être reliées à des électrodes supportées par des bras articulés en un point intermédiaire de leur longueur sur un axe commun isolé électriquement, les extrémités des bras opposées eux électrodes étant reliées à un vérin pour commander l'écartement des électrodes pour la mise en place des pièces à souder et le rapprochement de celle-ci pour souder la pièce, et est caractérisée en ce que chaque bras est solidaire d'un contact circulaire monté sur l'axe d'articulation desdits bras, tandis que les extrémités libres des branches du circuit secondaire comportent chacune un patin présentant une surface concave destinée à coopérer avec un segment de la circonférence du contact circulaire correspondant, des moyens étant prévus pour presser lesdits patins contre lesdits contacts circulaires.

Grâce à une telle structure, on réalise une unité de soudage par résistance dans laquelle les dimensions du transformateur et le poids de celui-ci peuvent être réduits.

Suivant une caractéristique constructive particulière, chaque contact circulaire est constitué par une pièce circulaire bonne conductrice de l'électricité, présentant un trou central pour permettre son montage sur l'axe d'articulation des bras et fixée contre une face correspondante de ceux-ci par des vis. Ainsi, on peut aisément démonter et remplacer les contacts circulaires usés.

Chaque patin de contact peut présenter, du côté opposé à sa surface coopérant avec le contact circulaire correspondant, une rampe inclinée et il est prévu des cales pentées coopérant avec lesdites rampes et poussées par des moyens élastiques pour appliquer les patins contre les contacts circulaires. Ainsi, on réalise un système à rattrapage de jeu automatique qui assure une bonne liaison électrique entre les contacts circulaires et les patins, même après un temps d'usage prolongé de l'unité de soudage.

De préference, les moyens élastiques tendant à pousser les cales pentées pour appliquer les patins contre les contacts circulaires, sont de tension réglable.

Suivant une caractéristique constructive, chaque cale pentée est montée mobile sur une tige filetée, disposée dans le plan du patin de contact correspondant, un ressort de compression étant inséré entre une extrémité de la cale pentée et un écrou.

Suivant encore une autre caractéristique, le vérin comporte un corps mobile dans les guides d'un bâti supportant le transformateur et relié à l'une des extrémités correspondant de l'un des bras, tandis que la tige du piston dudit vérin est reliée à l'extrémité correspondante de l'autre bras.

Suivant une caractéristique constructive, le bâti comporte deux joues présentant chacune une lumière allongée tandis que le corps du vérin présente des tétons montés coulissants dans les dites lumières allongées, ledit corps du vérin présentant à son extrémité traversée par la tige du piston, une chape dont les ailes présentent chacune une lumière allongée, celles-ci s'étendant dans une direction perpendiculaire aux lumières allongées dans lesquelles sont guidés les tétons du corps du vérin, l'extrémité correspondante de l'un des bras présentant les tétons coopérant avec les lumières de ladite chape, lesdites lumières allongées de guidage du corps du vérin étant parallèles à l'axe longitudinal du transformateur. On réalise ainsi une unité très compacte.

L'unité peut comporter des butées limitant l'angle d'ouverture des électrodes.

Enfin, le corps du vérin à son extrémité libre est percé d'un trou taraudé, dans lequel se visse une vis dont une extrémité comporte une butée disposée à l'intérieur du cylindre du vérin pour limiter la course du piston, tandis que l'autre extrémité comporte une butée destinée à coopérer avec un bord d'un manchon de guidage solidaire du bâti pour limiter la course de déplacement du corps du vérin. Ainsi, quelque soit la position dans l'espace de l'unité, on est assuré, lorsque les électrodes sont écartées, qu'aucun des bras ne pourra basculer, ce qui est particulièrement intéressant dans les installations utilisant des robots.

La présente invention va maintenant être décrite avec plus de détails en se référant à un mode de réalisation particulier donné à titre d'exemple seulement et représenté aux dessins annexés dans lesquels:

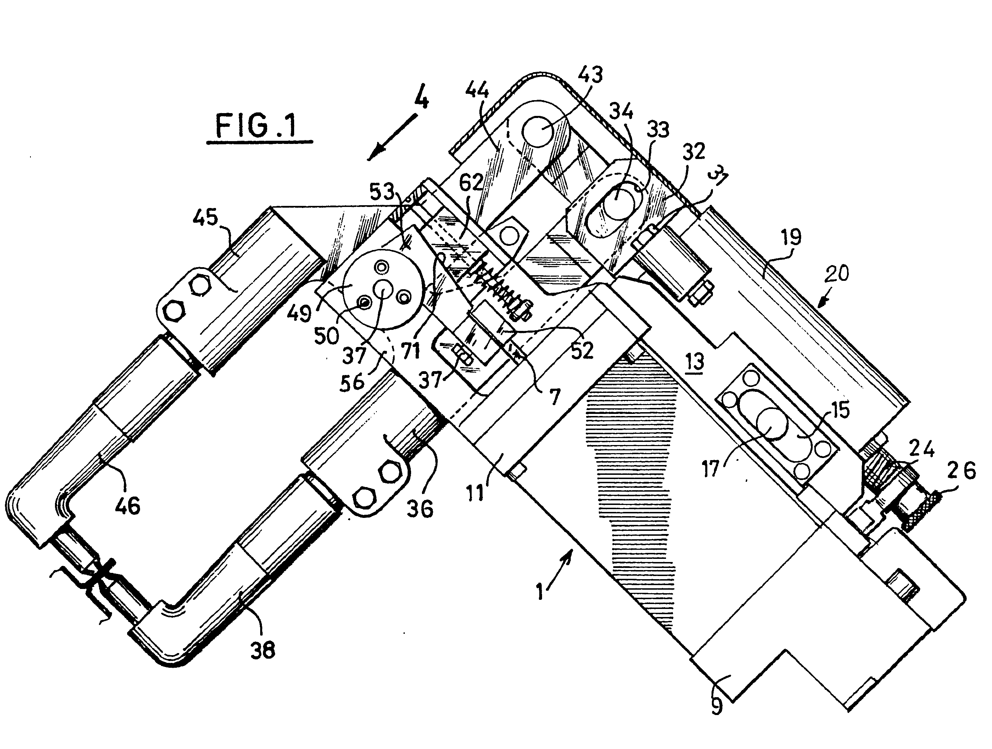

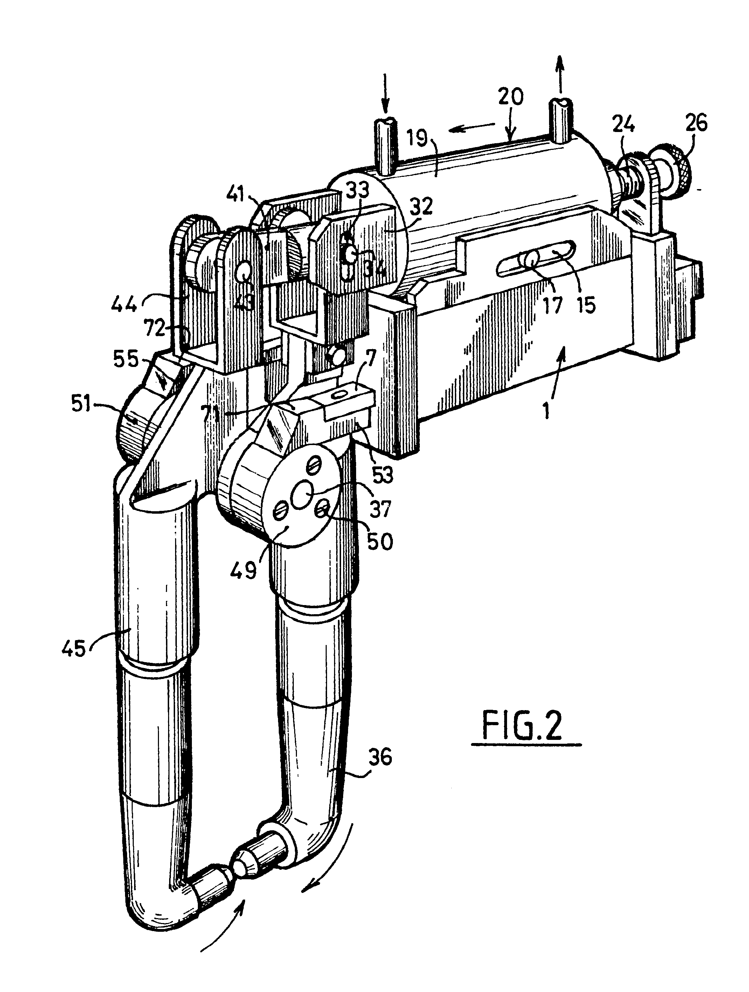

figure 1 est une vue en élévation de côté d'une unité de soudage par résistance du type ciseaux selon l'invention,

figure 3 est une vue en perspective de l'unité de soudage de la figure 1,

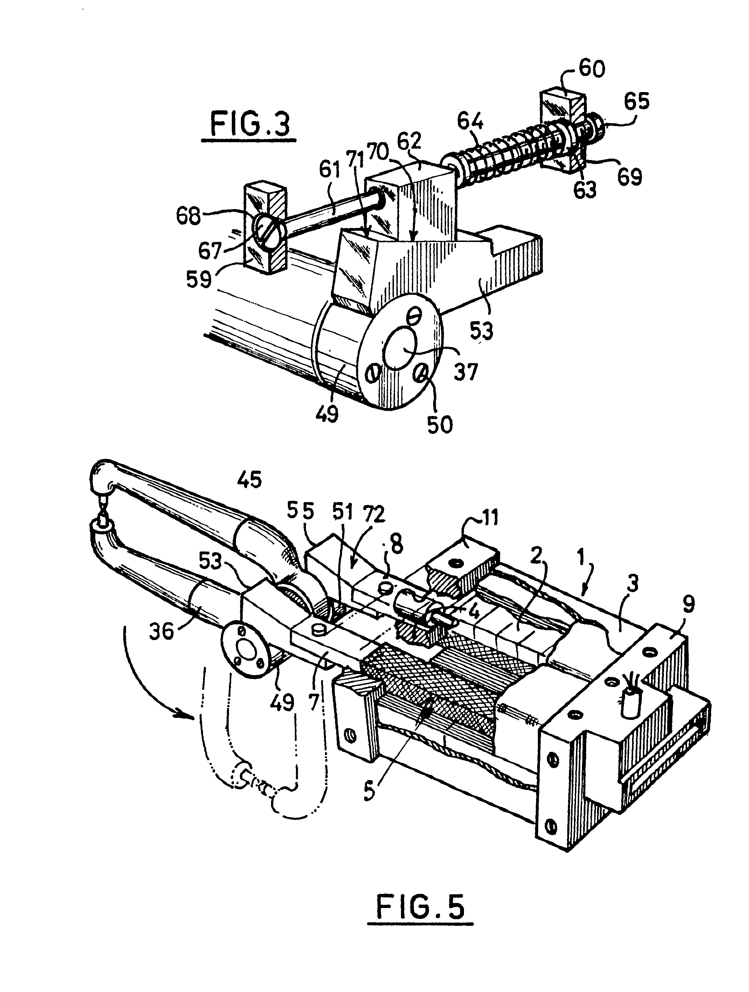

figure 3 montre en perspective à plus grande échelle, un détail,

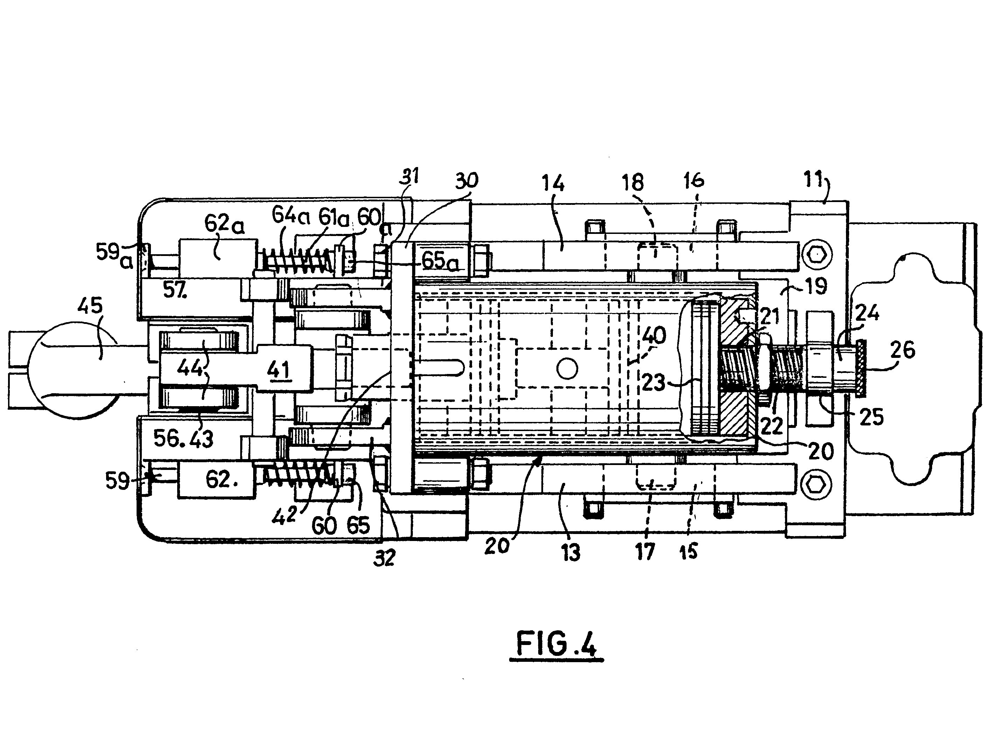

figure 4, est une vue en plan avec des arrachements de l'unité de soudage selon l'invention,

figure 5 est une vue en perspective du transformateur de l'unité de soudage.

L'unité de soudage électrique par résistance représentée aux figures, comprend un transformateur désigné dans son ensemble par la référence 1 et formé d'un circuit magnétique feuilleté 2 maintenu dans un carter tubulaire 3, de deux bobines d'enroulement primaire destinées à être alimentées à partir d'une source de courant alternatif et d'un circuit secondaire 5 constitué d'un barreau de cuivre de section méplate affectant la forme d'un U pour présenter deux branches 7 et 8. Le circuit secondaire 5 est monté mobile par rapport au circuit primaire du transformateur. Bien entendu, les différents éléments sont convenablement isolés et il est prévu, comme cela est bien connu de la technique, un système de refroidissement.

Le carter tubulaire 3 est enserré entre deux brides 9 et 11.

Les brides 9 et 11 supportent deux joues 13 et 14 qui présentent des ouvertures oblongues 15 et 16 respectivement, dans lesquelles sont engagés les tétons 17 et 18 solidaires du corps 19 d'un vérin pneumatique 20.

Le corps du vérin 20 à une extrémité, est percé d'un trou taraudé 21 dans lequel se visse une vis 22 qui est solidaire dans sa partie logée dans le cylindre du vérin d'une butée circulaire 23, tandis que l'autre extrémité est prolongée par une partie cylindrique lisse 24, susceptible de coulisser dans un manchon 25 fixé sur la bride 11, et terminé par un bouton de manœuvre 26 qui constitue une butée. Un contre écrou de blocage 27 est prévu.

Le corps 19 du vérin 20 à son extrémité opposée à celle comportant la butée 26, est pourvue d'une bride 30 fixée par des vis 31, cette bride étant pourvue d'une chape avec deux ailes 32 percées chacune

d'une lumière oblongue 33. Les lumières 33 s'étendent dans les directions perpendiculaires par rapport aux lumières 15 et 16.

Avec les lumières 33 coopèrent deux tétons 34 solidaires d'un étrier 35 prolongé par un bras 36 destiné à supporter une électrode 38 et monté pivotant sur un axe 37.

Le vérin 20 comporte un piston 40 dont la tige du piston 41 traverse une ouverture 42 du fond de la chape de la bride 30 et qui, à son extrémité libre, supporte un axe 43 sur lequel s'articulent les ailes 44 d'un chape solidaire d'un bras 45 articulé sur l'axe 37 et supportant une électrode 46.

L'axe 37 est isolant et sur le bras 36 est fixé, par des vis 50, un contact circulaire 46 engagé sur ledit axe 37.

Le contact circulaire 51 est fixé de la même façon au bras 45 et est également engagé sur l'axe 37. Sur la branche 7 du circuit secondaire 5 est fixé par une bride 52, un patin 53 destiné à coopérer par une surface de contact concave avec le contact 49. La seconde branche 8 du circuit secondaire 5 est pourvue d'un patin 55 fixé par une bride 56 et présentant une surface de contact concave destinée à porter contre le contact circulaire 51. Les surfaces de contact concaves des patins 53 et 55 correspondent à un segment de la circonférence des contacts circulaires 49 et 51.

L'axe 37 est supporté par deux joues 56 et 57, la joue 56 présentant deux pattes 59 et 60 percées chacune d'un trou 68, 69 respectivement, qui sont traversés par une vis 61 dont l'une des extrémités comporte une tête 67, tandis que l'autre extrémité est terminée par une butée 65. Sur la vis peut coulisser librement une cale pentée 62 présentant une rampe inclinée 70 destinée à coopérer avec une rampe correspondante 71 du patin 53. Un ressort de compression 64 est inséré entre un écrou 63 monté sur la vis 61 au voisinage de sa butée 65 et l'extrémité correspondante de la cale 62. En faisant tourner la vis 61 avec un tournevis on peut déplacer l'écrou 63 et ainsi régler la force du ressort 64.

Il est prévu une cale pentée 62a identique à la cale 62 pour coopérer avec une rampe inclinée 72 du patin 55, le montage de cette cale 62a est le même que celui qui vient d'être décrit pour la cale 62 et ne sera pas décrit ici en détail. On a ajouté aux figures les références correspondantes pour désigner les organes similaires affectés de la lettre «a».

L'unité de soudage, selon l'invention, trouve une application particulièrement intéressante pour des robots industriels pour le soudage par résistance par points. En effet, sa conception permet de le réaliser à un poids permettant l'utilisation de robots, puisqu'il pèse en ordre de marche, 38 kg environ.

Un avantage important est également que, quelque soit sa position dans l'espace, l'écartement entre les électrodes en position ouverte reste identique, ce qui n'est pas le cas des unités de soudage de la technique antérieure.

On peut plier les bras 36 et 45 suivant différents angles, selon qu'on désire que les points de soudure soient effectués latéralement par rapport au transformateur, ou en avant par rapport à ce dernier.

Pour écarter les électrodes, on envoie de l'air comprimé du côté de la tige 45 du piston 40 dans le vérin 19 le piston 40 se déplace pour venir porter contre la butée 23, ce qui correspond au déplacement angulaire maximum de l'ouverture du bras 45. Lorsque le piston est bloqué par la butée 23, le corps 19 du vérin 20 se déplace dans le sens de la flèche F guidé par les tétons 17 et 18, guidé dans les lumières 15 et 16, les ailes 32 de la chape en coopérant par leurs lumières 33 avec les tétons 34 commandent le basculement du bras 36 dans le sens de l'ouverture de celui-ci, jusqu'à ce que la butée 26 vienne porter contre le bord correspondant du manchon 25. Dans cette position d'ouverture, on conçoit que, quelque soit la position dans l'espace de l'unité, qu'aucun des bras 36 ou 45 ne pourra basculer sur l'axe 37, puisque aussi bien le vérin 19 que le piston 40 sont en butée.

On peut modifier la valeur d'ouverture des bras 36 et 45 en vissant ou en dévissant la vis 22. Pour réaliser la soudure, le transformateur étant sous tension, on envoie de l'air comprimé du côté libre du piston 40, pour provoquer le basculement du bras 45 dans le sens de la flèche G, tandis que le bras 36 bascule dans le sens de la flèche H provoqué par le déplacement du corps 19 du vérin 20 dans le sens opposé à la flèche F.

On conçoit que l'unité de soudage, selon l'invention, présente encore un grand nombre d'avantages. En effet, comme les bornes du circuit secondaire 5 sont pratiquement directement reliées aux bras des électrodes, on peut réduire le volume de l'unité.

La suppression des tresses souples constitue un avantage considérable puisque l'impédance secondaire du transformateur est diminuée.

Le circuit secondaire du transformateur est mobile par rapporte au circuit primaire, ce qui permet d'assurer l'autocentrage des patins de contact 53 et 55, de compenser l'usure de ceux-ci, et d'avoir à respecter des tolérances serrées d'usinage et de montage de la pince, par rapport aux bornes du circuit secondaire du transformateur 1.

Bien entendu, l'invention n'est pas limitée au mode de réalisation qui vient d'être décrit et représenté. On pourra y apporter de nombreuses modifications de détails sans sortir pour cela du cadre de l'invention.

**Revendications**

1. Unité de soudage électrique par résistance du type ciseaux, comprenant, un transformateur (1) dont l'enroulement primaire est destiné à être relié à une source de courant alternatif convenable, un circuit secondaire (5) d'une seule spire, constitué par un barreau en forme de U présentant deux branches (7 et 8) et monté mobile dans le transformateur les extrémités libres desdites branches étant destinées à être reliées à des électrodes supportées par des bras (45-36) articulées en un point intermédiaire de leur longueur sur un axe commun isolé électriquement (37), les extrémités des bras (45-36) opposées aux électrodes étant reliées à un vérin (19) pour commander l'écartement des électrodes pour la mise en place des pièces à souder, et le rapprochement de celles-ci pour souder les pièces, caractérisée en ce que chaque bras (45-36) est solidaire d'un contact circulaire (49-51) monté sur l'axe (37) d'articulation desdits bras, tandis que les extrémités libres des branches (7-8) du circuit secondaire (5) comportent chacune un patin de contact (53-55) présentant une surface concave destinée à coopérer avec un segment de la circonférence du contact circulaire (51-49) correspondant, des moyens (62-62a) étant prévus pour presser lesdits patins (53-55) contre lesdits contacts circulaires (51-49).

2. Unité de soudage électrique par résistance du type ciseaux selon la revendication 1, caractérisée en ce que chaque contact circulaire (49-51) est constitué par une pièce circulaire bonne conductrice de l'électricité, présentant un trou central pour permettre son montage sur l'axe (37), d'articulation des bras et fixée contre une face correspondante de ceux-ci par des vis (50).

3. Unité de soudage électrique par résistance du type ciseaux selon la revendication 1, caractérisée en ce que chaque patin (53-55) de contact présente du côté opposé à sa surface coopérant avec le contact circulaire correspondant (49-51), une rampe inclinée (71-72), et il est prévu des cales pentées (62-62a) coopérant avec lesdites rampes (71-72) et poussées par des moyens élastiques (64) pour appliquer les patins contre les contacts circulaires.

4. Unité de soudage électrique par résistance du type ciseaux selon la revendication 3, caractérisée en ce que les moyens élastiques (64) tendant à pousser les cales pentées (62-62a) pour appliquer les patins (53-55) contre les contacts circulaires, sont de tension réglable.

5. Unité de soudage électrique par résistance du type ciseaux selon les revendications 3 et 4, caractérisée en ce que chaque cale pentée (62-62a) est montée mobile sur une tige filetée (61) disposée dans le plan du patin de contact (53-55) correspondant, un ressort de compression (64) étant inséré entre une extrémité de la cale pentée (62-62a) et un écrou (63).

6. Unité de soudage électrique par résistance du type ciseaux selon la revendication 1, caractérisée en ce que le vérin (20) comporte un corps (19) mobile dans les guides (15-16) d'un bâti supportant le transformateur (1) et relié à l'une des extrémités correspondantes de l'un des bras (36), tandis que la tige (41) du piston (40) dudit vérin (19) est reliée à l'extrémité correspondante de l'autre bras (45).

7. Unité de soudage électrique par résistance du type ciseaux selon la revendication 6, caractérisée en ce que le bâti comporte deux joues (13-14) présentant chacune une lumière allongée (15-16), tandis que le corps (19) du vérin (20) présente des tétons (17-18) montés coulissants dans lesdites lumières allongées, ledit corps (19) du vérin (20) présentant à son extrémité traversée par la tige (41), du piston (40), une chape dont les ailes (32) présentent chacune une lumière allongé (33), celles-ci s'étendant dans une direction perpendiculaire aux lumières allongées (15-16) dans lesquelles sont guidée les tétons (17-18) du corps (19) du vérin (20), l'extrémité correspondante de l'un des bras (36) présentant des tétons (34) coopérant avec les lumières de ladite chape, lesdites lumières allongées (15-16) de guidage du corps (19) du vérin (20) étant parallèles à l'axe longitudinal du transformateur (1).

8. Unité de soudage électrique par résistance du type ciseaux selon les revendications 6 et 7, caractérisée en ce qu'elle comporte des butées limitant l'angle d'ouverture des électrodes.

9. Unité de soudage électrique par résistance du type ciseaux selon la revendication 8, caractérisée en ce que le corps (19) du vérin (20) à son extrémité libre est percé d'un trou taraudé (21) dans lequel se visse une vis (22) dont une extrémité comporte une butée (23) disposéa à l'intérieur du cylindre du vérin pour limiter la course du piston (40), tandis que l'autre extrémité comporte une butée (26) destinée à coopérer avec un bord d'un manchon (25) de guidage solidaire du bâti, pour limiter la course de déplacement du corps du vérin (20).

**Patentansprüche**

1. Elektrische Widerstandsschweisseinheit vom Schweisszangentyp mit einem Transformateur (1), dessen Primärwicklung für die Verbindung mit einer geeigneten Wechselstromquelle vorgesehen ist, einem Sekundärkreis (5) mit einer einzigen Windung, die durch einen U-förmigen Stab gebildet ist, der zwei Anschlüsse (7 und 8) aufweist und lose in den Transformator eingebaut ist, wobei die freien Enden der genannten Anschlüsse für die Verbindung mit Elektroden vorgesehen sind, die von Armen (45-36) getragen sind, welche an einer zwischen ihren Enden gelegenen Stelle schwenkbar auf einer gemeinsamen, elektrisch isolierten Achse (37) gelagert sind, und wobei die den Elektroden entgegengesetzten Enden der Arme (45-36) mit einem Kraftantrieb (19) verbunden sind, um das Auseinanderbewegen der Elektroden für das Instellungbringen der zu schweissenden Teile und das Zusammenbewegen der Elektroden für das Verschweissen der Teile zu steuern, dadurch gekennzeichnet, dass jeder Arm (45-36) mit einem kreisrunden Kontaktkörper (49-51) fest verbunden ist, der auf der Schwenkachse (37) des genannten Arms gelagert ist, dass die freien Enden der Anschlüsse (7-8) des Sekundärkreises (5) je ein Gleitkontaktstück (53-55) aufweisen, das eine konkave Aussenfläche besitzt, die dazu vorgesehen ist, mit einem Umfangsabschnitt des zugeordneten runden Kontaktkörpers (51-49) zusammenzuwirken, und dass Mittel (62-62a) vorgesehen sind, um die genannten Gleitkontaktstücke (53-55) gegen die genannten runden Kontaktkörper (51-59) anzupressen.

2. Elektrische Widerstandsschweisseinheit vom Schweisszangentyp nach Anspruch 1, dadurch gekennzeichnet, dass jeder runde Kontaktkörper (49-51) durch ein kreisrundes, elektrisch gut leitendes Teil gebildet ist, das eine zentrale Bohrung zum Ermöglichen seiner Lagerung auf der Schwenkachse (37) des Armes besitzt und an einer zugeordneten Fläche desselben mittels Schrauben (50) befestigt ist.

3. Elektrische Widerstandsschweisseinheit vom Schweisszangentyp nach Anspruch 1, dadurch gekennzeichnet, dass jedes Gleitkontaktstück (53-55) auf derjenigen Seite, die der mit dem zugehörigen runden Kontaktkörper (49-51) zusammenwirkenden Seite entgegengesetzt ist, eine geneigte Rampenfläche (71-72) besitzt und dass mit den genannten Rampenflächen (71-72) zusammenwirkende, keilartig abgeschrägte Klötze (62, 62a) vorgesehen sind, die für das Andrücken der Gleitkontaktstücke an die runden Kontaktkörper mittels elastischer Mittel (64) belastet sind.

4. Elektrische Widerstandsschweisseinheit vom Schweisszangentyp nach Anspruch 3, dadurch gekennzeichnet, dass die Spannung der elastischen Mittel (64), die zur Belastung der abgeschrägten Klötze (62, 62a) für das Andrücken der Gleitkontaktstücke (53, 55) an die runden Kontaktkörper dienen, einstellbar ist.

5. Elektrische Widerstandsschweisseinheit vom Schweisszangentyp nach den Ansprüchen 3 und 4, dadurch gekennzeichnet, dass jeder abgeschrägte Klotz (62, 62a) auf einer Gewindespindel (61) beweglich gelagert ist, die in der Ebene des zugehörigen Gleitkontaktstücks (53, 55) angeordnet ist, und dass eine Druckfeder (64) zwischen dem einen Ende des abgeschrägten Klotzes (62, 62a) und einer Schraubenmutter (63) eingespannt ist.

6. Elektrische Widerstandsschweisseinheit vom Schweisszangentyp nach Anspruch 1, dadurch gekennzeichnet, dass der Kraftantrieb (20) einen Körper (19) besitzt, der in Führungen (15, 16) eines den Transformator (1) tragenden Rahmens beweglich und mit dem zugeordneten einen Ende eines der Arme (36) verbunden ist, und dass die Kolbenstange (41) des Kolbens (40) des genannten Kraftantriebs (19) mit dem zugeordneten Ende des anderen Armes (45) verbunden ist.

7. Elektrische Widerstandsschweisseinheit vom Schweisszangentyp nach Anspruch 6, dadurch gekennzeichnet, dass der Rahmen zwei Wangen (13-14) besitzt, die einen langgestreckten Durchbruch (15-16) aufweisen, dass der Körper (19) des Kraftantriebes (20) Zapfen (17-18) besitzt, die verschiebbar in den genannten langgestreckten Durchbrüchen gelagert sind, dass der genannte Körper (19) des Kraftantriebes (20) an seinem von der Stange (41) des Kolbens (40) durchdrungenden Ende ein Gabelgelenk bildet, dessen Schenkel (32) je ein Langloch (33) besitzen, die sich senkrecht zu den langgestreckten Durchbrüchen (15, 16) erstrecken, in denen die Zapfen (17-18) des Körpers (19) des Kraftantriebs (20) geführt sind, dass das zugeordnete Ende des einen Arms (36) Zapfen (34) besitzt, die mit den Langlöchern des genannten Gabelgelenks zusammenwirken, und dass die langgestreckten Durchbrüche (15-16) der Führung des Körpers (19) des Kraftantriebs (20) parallel zur Längsachse des Transformators (1) verlaufen.

8. Elektrische Widerstandsschweisseinheit vom Schweisszangentyp nach den Ansprüchen 6 und 7, dadurch gekennzeichnet, dass sie Anschläge besitzt, die den Öffnungswinkel der Elektroden begrenzen.

9. Elektrische Widerstandsschweisseinheit vom Schweisszangentyp nach Anspruch 8, dadurch gekennzeichnet, dass der Körper (19) des Kraftantriebs (20) an seinem freien Ende von einer Gewindebohrung (21) durchzogen ist, mit der eine Schraube (22) in Gewindeeingriff ist, deren eines Ende einen Anschlag (23) aufweist, der im Innern des Zylinders des Kraftantriebs gelegen ist, um die Bewegung des Kolbens (40) zu begrenzen, während ihr anderes Ende einen Anschlag (26) besitzt, der für die Zusammenwirkung mit einem Seitenrand einer Führungshülse (25) bestimmt ist, die mit dem Rahmen fest verbunden ist, um die Verschiebebewegung des Körpers des Kraftantriebs (20) zu begrenzen.

## Claims

1. Pincer-type resistance electric welding unit, comprising a transformer (1), of which the primary winding is adapted to be connected to a suitable alternating current source, a single-coil secondary circuit (5), formed by a U-shaped rail having two arms (7 and 8) and movably mounted in the transformer, the free ends of the said arms being adapted to be connected to electrodes supported by legs (45-36) pivoted at a point intermediate of their length on an electrically insulated common shaft (37), those ends of the legs (45-36) opposite to the electrodes being connected to a jack (19) for controlling the spacing of the electrodes for the positioning of the components to be welded and the bringing together of the said components for the welding thereof, characterised in that each leg (45-36) is fast with a circular contact (49-51) mounted on the pivot shaft (37) of the said legs, while the free ends of the arms (7-8) of the secondary circuit (5) each comprise a contact shoe (53-55) having a concave surface adapted to cooperate with a segment of the circumference of the corresponding circular contact (51-49), means (62-62a) being provided for pressing the said shoes (53-55) against the said circular contacts (51-49).

2. Pincer-type resistance electric welding unit according to claim 1, characterised in that each circular contact (49-51) is formed by a circular part which is a good electricity conductor, having a central hole to permit the fitting thereof on a pivot shaft (37) of the legs and secured against a corresponding face of these latter by screws (50).

3. Pincer-type resistance electric welding unit according to claim 1, characterised in that each contact shoe (53-55) has an inclined ramp (71-72) on the side opposite to its surface cooperating with the corresponding circular contact (49-51), and it is provided with sloped wedges (62-62a) cooperating with the said ramps (71-72) and urged by resilient means (64) for applying the shoes against the circular contacts.

4. Pincer-type resistance electric welding unit according to claim 3, characterised in that the resilient means (64) tending to push the sloped wedges (62-62a) in order that shoes (53-55) are caused to bear against the circular contacts can be regulated as regards tension.

5. Pincer-type resistance electric welding unit according to claims 3 and 4, characterised in that each wedge (62-62a) is mounted to be movable on a threaded rod (61) disposed in the plane of the corresponding contact shoe (53-55), a compression spring (64) being fitted between one end of the wedge (62-62a) and a nut (63).

6. Pincer-type resistance electric welding unit according to claim 1, characterised in that the jack (20) comprises a member (19) which is movable in the guides (15-16) of a frame supporting the transformer (1) and connected to one of the corresponding ends of one of the legs (36), while the rod (41) of the piston (40) of the said jack (19) is connected to the corresponding end of the other leg (45).

7. Pincer-type resistance electric welding unit according to claim 6, characterised in that the frame comprises two cheeks or sides (13-14) which each have an elongated opening (15-16), while the member (19) of the jack (20) has studs (17-18) mounted for sliding movement in the said elongated openings or slots, the body (19) of the jack (20) having, at its end which is traversed by the rod (41) of the piston (40), a cover of which the wings (32) each have a slot (33), these latter extending in a direction perpendicular to the slots (15-16) in which are guided the studs (17-18) of the member (19) of the jack (20), the corresponding end of one of the arms (36) having studs (34) which cooperate with the slots of the said cover, the said guiding slots (15-16) for the member or housing (19) of the jack (20) being parallel to the longitudinal axis of the transformer (1).

8. Pincer-type resistance electric welding unit according to claims 6 and 7, characterised in that it comprises stops for limiting the angle of opening of the electrodes.

9. Pincer-type resistance electric welding unit according to claim 8, characterised in that the housing (19) of the jack (20), at its free end, has drilled therein a tapped hole (21) into which is screwed a screw (22), of which one end comprises a stop (23) disposed inside the jack cylinder for limiting the travel of the piston (40), while the other end comprises a stop (26) adapted to cooperate with an edge of a guiding sleeve (25) fast with the frame, in order to limit the travel of the housing of the jack (20).

FIG.1

FIG.2

## FIG.3

## FIG.5

FIG.4